**Europäisches Patentamt**

**European Patent Office**

**Office européen des brevets**

(19)

(11) **EP 1 609 988 A1**

(12) **EUROPÄISCHE PATENTANMELDUNG**

| | |
|---|---|
| (43) Veröffentlichungstag:<br>**28.12.2005   Patentblatt 2005/52** | (51) Int Cl.⁷: **F03G 7/04** |

(21) Anmeldenummer: **05011822.3**

(22) Anmeldetag: **01.06.2005**

(84) Benannte Vertragsstaaten:
**AT BE BG CH CY CZ DE DK EE ES FI FR GB GR HU IE IS IT LI LT LU MC NL PL PT RO SE SI SK TR**
Benannte Erstreckungsstaaten:
**AL BA HR LV MK YU**

(30) Priorität: **07.06.2004  DE 102004028601**

(71) Anmelder:
- **Rennebeck, Klaus, Dr.**
  **73240 Wendlingen (DE)**
- **Scheller, Albert, Dr.**
  **73240 Wendlingen (DE)**

(72) Erfinder:
- **Rennebeck, Klaus, Dr.**
  **73240 Wendlingen (DE)**
- **Scheller, Albert, Dr.**
  **73240 Wendlingen (DE)**

(74) Vertreter: **Patentanwälte**
**Hosenthien-Held und Dr. Held**
**Klopstockstrasse 63-65**
**70193 Stuttgart (DE)**

(54)    **Geothermische Kraftanlage**

(57)    Die Erfindung betrifft ein Verfahren und eine Anlage zur Nutzung von geothermischer Wärme gemäß dem ein Wärmetransportfluid über mindestens eine Produktionsbohrung dem Erdreich entnommen wird, wobei es eine gegenüber der Umgebungstemperatur erhöhte Temperatur aufweist, und das Wärmetransportfluid nach der Entnahme einem Elektrolyseur (5) zugeführt wird, wobei dem Wärmetransportfluid Kohlenstoff, insbesondere eine mit Bor dotiertem Diamant und/oder einem Nebengruppenelement der achten Nebengruppe beschichtete Aktivkohle, und/oder eine Kohlenstoff-Verbindung und/oder eine mit Bor dotiertem Diamant und/oder einem Nebengruppenelement der achten Nebengruppe beschichteter Zeolith und/oder ein Nebengruppenelement der achten Nebengruppe und/oder eine Verbindung eines Nebengruppenelements der achten Nebengruppe zugesetzt wird.

Fig. 1

**EP 1 609 988 A1**

**Beschreibung**

Die Erfindung betrifft ein Verfahren zur Nutzung von geothermischer Wärme mit den Merkmalen des Oberbegriffs des Anspruchs 1.

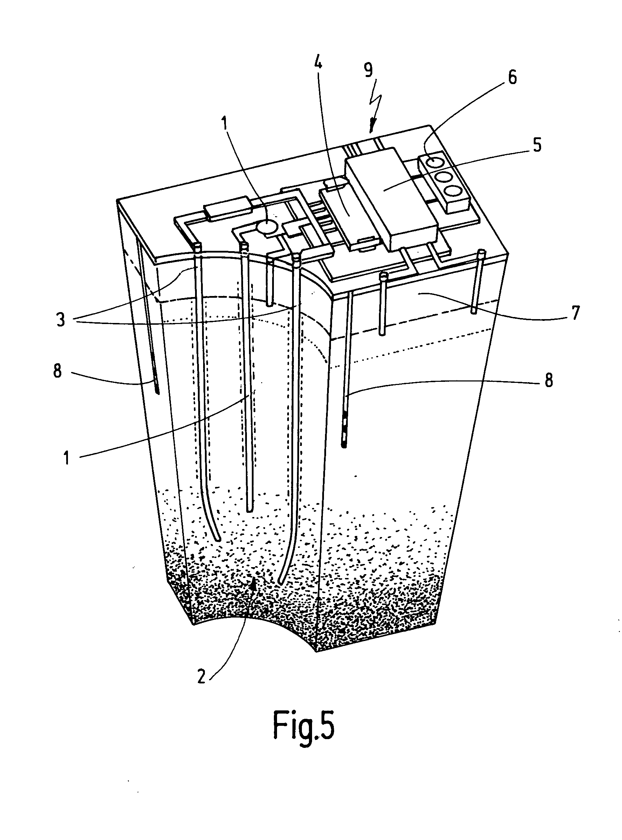

Bekannt ist die Verwendung von Geothermie nach dem Hot-Dry-Rock-Verfahren (HDR-Verfahren). Die Temperatur erhöht sich im Normalfall, je tiefer man in das Innere der Erde vordringt, im Durchschnitt um 3°C je 100m. Im obersten Erdmantel werden Temperaturen von ca. 1300°C angenommen. Um an die Geothermie nutzen zu können, wird das in der Tiefe vorhandene heiße Gestein über (Tief-)Bohrungen erschlossen. Zwischen den Bohrungen werden mit Wasserdruck, also hydraulisch, Fließwege aufgebrochen oder vorhandene Fließwege aufgeweitet. Auf diese Weise wird ein unterirdischer Wärmetauscher erzeugt, in dem sich von der Oberfläche eingepresstes Wasser erhitzt und anschließend wieder nach oben gefördert, wo Wärmeenergie abgegeben wird (Prinzipdarstellung siehe Fig. 5, © Helmut Tenzer). Die Zirkulation im HDR-System erfolgt in einem geschlossenen (Primär-)Kreislauf, wobei dieser derart unter Druck steht, dass ein Sieden der Wärmeträgerflüssigkeit verhindert wird. Über einen Wärmetauscher ist der Primärkreislauf mit einem Sekundärkreislauf verbunden, in welchem eine Turbine angeordnet ist. Dabei wird im Wärmetauscher Wasserdampf erzeugt, welcher die Turbine antreibt. In Fig. 5 bezeichnet die Ziffer 1 die Injektionsbohrung mit Injektionspumpe, 2 das simulierte Kluftsystem (Tiefe: ca. 4000-6000m, T: ca. 200°C, 3 Produktionsbohrungen, 4 Wärmetauscher, 5 Turbinenhaus, 6 Kühlung, 7 Hochtemperatur-Untergrundspeicher für Überschußwärme, 8 Beobachtungsbohrungen und 9 Verbraucher Strom und Wärme.

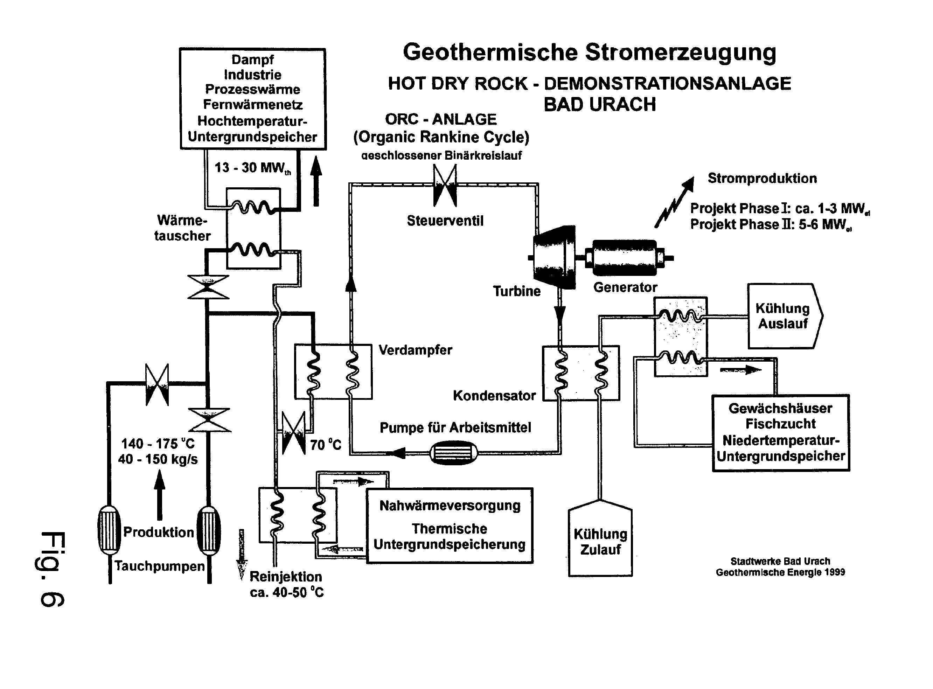

In Fig. 6 ist ein Schema der geothermischen Stromerzeugungsanlage in Bad Urach schematisch dargestellt. Hierbei sind - entgegen der Prinzipdarstellung von Fig. 5 - mehrere Wärmetauscher im Primärkreislauf vorgesehen, die durch ein entsprechendes Vorsehen von Ventilen und Bypässen abwechselnd und/oder aufeinanderfolgend und/oder parallel zueinander in Betrieb sein können. Ferner wird weist der Primärkreislauf zwei Bohrlöcher, in denen jeweils Tauchpumpen vorgesehen sind, für die Zuleitung der Wärmeträgerflüssigkeit zum Produktionsbereich und ein Bohrloch für die Rückleitung der Wärmeträgerflüssigkeit ins Erdinnere auf. Die Nutzung der über die Wärmetauscher gewonnenen Wärme im Senkundärkreislauf erfolgt auf bekannte Weise, wie zur Dampferzeugung zum Antrieb einer Turbine für die Stromerzeugung, zur Fernwärmeerzeugung und/oder zur Wiedereinleitung in das Erdreich zur thermischen Untergrundspeicherung.

Aus der DE 696 23 773 T2 ist ferner ein Verfahren zur Umwandlung von Erdwärme in Elektrizität bekannt, wobei eine oder mehrere Substanzen in einem Schacht bzw. Bohrloch nach unten in eine Tiefe transportiert werden, in der Erdwärme (entweder durch Sole- oder Dampfreservoirs oder heißen trockenen Fels) ausreichend ist, um eine thermische Reaktion auszulösen, wie beispielsweise eine endotherme Reaktion oder eine Elektrolysereaktion, die zwischen den Substanzen erfolgt. Die Reaktionsprodukte werden dann getrennt zu der Oberfläche transportiert, wo die Produkte einer umgekehrten (exothermen) Reaktion unterzogen werden und wo die aus dieser exothermen Reaktion entstandene Energie in eine elektrische Energie umgewandelt wird, ob durch eine Dampfturbine, eine Verbrennungsturbine oder eine Kombination der beiden. Unter bestimmten Umständen könnte eine Brennstoffzelle an die Stelle der Turbine(n) treten.

Um die Reaktionsprodukte getrennt an die Oberfläche zu transportieren, wird in der DE 696 23 773 T2 vorgeschlagen, dass eine Leitung oder ein Leitungssatz aus einem Material hergestellt wird, das für eines der Produkte der endothermen Reaktion durchlässig ist, aber für die anderen Produkte der endothermen Reaktion und für die Reaktionspartner undurchlässig ist oder diese zurückstößt (bspw. chemisch, durch höheren Druck). Eine andere Leitung oder ein Leitungssatz nimmt die übrigen Produkte auf. Hierbei sind Katalysatoren (insbesondere Palladium) vorgesehen, welche die Trennungsreaktion hervorrufen oder unterstützen und eine Rückreaktion zumindest während des Transports an die Oberfläche verhindern. Eine derartige Ausgestaltung, insbesondere in Verbindung mit den zu verwendenden Materialien im Falle der Abtrennung von Wasserstoff auch während des Transports zur Oberfläche, erfordert jedoch extrem hohe Investitionen.

Beide Verfahren zur Energieerzeugung lassen noch Wünsche offen, insbesondere auch in Hinblick auf einen möglichen Dauerbetrieb mit möglichst geringen Ausfallzeiten für Wartungsarbeiten.

Der Erfindung liegt die Aufgabe zu Grunde, das eingangs genannte Verfahren zur Energieerzeugung zu verbessern. Diese Aufgabe wird erfindungsgemäß durch ein Verfahren mit den Merkmalen des Anspruches 1 gelöst. Vorteilhafte Ausgestaltungen sind Gegenstand der Unteransprüche.

Erfindungsgemäß ist ein Verfahren zur Nutzung von Geothermie vorgesehen, gemäß dem ein Wärmetransportfluid, insbesondere Wasser/Wasserdampf über mindestens eine Produktionsbohrung dem Erdreich entnommen wird, wobei das Wärmetransportfluid eine gegenüber der Umgebungstemperatur erhöhte Temperatur aufweist und es einem Elektrolyseur zugeführt wird, so dass unter Zuführung einer relativ geringen Energie insbesondere Wasserstoff hergestellt werden kann. Dabei wird dem Wärmetransportfluid Kohlenstoff und/oder eine Kohlenstoff-Verbindung und/oder ein Zeolith und/oder ein Nebengruppenelement der achten Nebengruppe und/oder eine Verbindung eines Nebengruppenelements der achten Nebengruppe zugesetzt. Der Zusatz hat sowohl die Funktion eines Katalysators als auch gegebenenfalls einer mobilen Elektrode, so dass entsprechend regenerierbar ausgebildete Elektroden, d.h. insbesondere mobile Kohlenstoff-Elektroden, des Elektrolyseurs während des Betriebs regeneriert werden können, wodurch ein Stillstand, wie er bei herkömmlichen Elektrolyseuren erforderlich ist, um eine mobile Elektrode zu erneuern, vermieden werden kann. Der Zusatz kann "von Hand" oder durch die Wahl des Verlaufs der Produktionsbohrung erfolgen. Bei der Elektrolyse ergeben sich aus Kohle, Wasser und Energie Sauerstoff, Kohlenmonoxid und Wasserstoff. Methyl oder Methan, Wasser und Energie ergibt Wasserstoff und Kohlendioxid, Kohlenmonoxid, Silan, Schwefel, Hydroxyapatite ($Ca_{10}(PO_4)_6(OH)_2$) und/oder Hydrazine.

Bevorzugt werden dem Wärmetransportfluid ferner Silizium und/oder oder eine Silizium-Verbindung, wie insbesondere Monolilan ($SiH_4$), und/oder Schwefel und/oder eine Schwefel-Verbindung und/oder Phosphor und/oder eine Phosphor-Verbindung und/oder Stickstoff und/oder eine Stickstoff-Verbindung, wie insbesondere Hydrazin, $NH_x$, und/oder $TiO_2$ und/oder $CuO_x$ und/oder $ZnO_x$ und/oder $Fe_2O_3$ und/oder $Fe_3O_4$ und/oder $WO_3$ und/oder $V_2O_5$ und/oder $LiCO_3$ und/oder $KCO_3$ und/oder $NiO_x$ zugesetzt. Ferner kann dem Wärmetransportfluid, gegebenenfalls auch vor einer dem Elektrolyseur nachfolgend angeordneten Brennstoffzelle Gold und/oder Zink und/oder Kupfer zugesetzt werden, welche die Katalyse zur Wasserstoffgewinnung unterstützen und bei entsprechendem Brennstoffzellentyp als Reformer dienen. Die entsprechenden Stoffe können entweder im Erdreich vorhanden sein, so dass sie zumindest teilweise automatisch vom Wärmetransportfluid mitgenommen werden, sie können aber auch künstlich dem Wärmetransportfluid beigegeben werden, sei es vor oder nach der Wärmeaufnahme im Erdinneren.

Bevorzugt wird das Wasser und/oder ein Reaktionsprodukt einer dem Elektrolyseur nachgeordneten Brennstoffzelle über eine Injektionsbohrung wieder dem Erdreich zugeführt, so dass sich - bei entsprechender Beschaffenheit des Untergrundes - ein nahezu geschlossener Kreislauf ergibt.

Zur Optimierung der Wasserstoffgewinnung wird bevorzugt die Wärmetransportfluid-Temperatur vor dem Elektrolyseur weiter erhöht, vorzugsweise mittels Mikrowellen, eines Lasers, elektrisch und/oder induktiv. Dabei wird die Dampftemperatur bei Bedarf vor dem Elektrolyseur von 200-300°C auf 500-1000°C erhöht, sofern die gewünschte Dampftemperatur am Eintritt in den Elektrolyseur nicht schon auf Grund der Bohrungstiefe erreicht wird. Bei Temperaturen von unter ca. 150°C, gegebenenfalls 200°C, bis unter ca. 60°C ist die Trennung mit einem Feststoffpolymerelektrolyten, der Wasserstoffionen leitet, mit einem Elektrolyseur auf PEM-Basis möglich.

Vorzugsweise ist zur Energieerzeugung und zum Vorsehen eines mehr oder weniger geschlossenen Kreislaufs dem Elektrolyseur nachgeordnet eine Brennstoffzelle angeordnet, in welcher der Wasserstoff und gegebenenfalls auch der Sauerstoff, der im Elektrolyseur erzeugt wird, wieder verwertet wird. Als Brennstoffzellen kommen beispielsweise folgende Typen in Frage: PEM (Polymer Electrolyte Fuel Cell, Betriebstemperatur bei 80°C, gegebenenfalls bis zu 200°C oder gar 300°C), DMFC (Direct Methanol Fuel Cell, Betriebstemperatur bei 100°C), MCFC (Molten Carbonate Fuel Cell, Betriebstemperatur bei 650°C) und SOFC (Solid Oxide Fuel Cell, Betriebstemperatur bei 800-1000°C).

Als Brenngas wird bei der PEM-Brennstoffzelle Wasserstoff, als Oxidant Sauerstoff bzw. Luft verwendet. Dabei kann das Anodengas auch Kohlendioxid und einen geringen Anteil an Kohlenmonoxid enthalten. Die Elektrodenreaktionen der PEM-Brennstoffzelle sind Folgende:

$$\text{Kathode: } \tfrac{1}{2}\,O_2 + 2\,H^+ + 2\,e^- \rightarrow H_2O$$

$$\text{Anode: } H_2 \rightarrow 2\,H^+ + 2\,e^-$$

Als Brenngas wird bei der MCFC Wasserstoff und/oder Erdgas, Kohlegas, Biogas, als Oxidant Sauerstoff bzw. Luft verwendet. Die Elektrodenreaktionen der MCFC ist Folgende:

$$\text{Kathode: } 2O_2 + 2\,CO_2 + 4\,e^- \rightarrow 2\,CO_3^{2-}$$

$$\text{Anode: } 2\,H_2 + 2\,CO_3^{2-} \rightarrow 2\,H_2O + 2\,CO_2 + 4e^-$$

Als Brenngas wird bei der SOFC Wasserstoff und/oder Erdgas, Kohlegas, Biogas, Silane, Hydrazine, Sulfone, als Oxidant Sauerstoff bzw. Luft verwendet. Die Elektrodenreaktionen der SOFC ist Folgende:

$$\text{Kathode: } \tfrac{1}{2}\,O_2 + 2\,e^- \rightarrow O^{2-}$$

$$\text{Anode: } H_2 + O^{2-} \rightarrow H_2O + 2\,e^-$$

Auf Grund der sehr hohen Temperaturen bei denen die MCFC und SOFC-Brennstoffzellen arbeiten, ist ein zusätzlicher Wirkungsgradgewinn durch eine Kühlung der Brennstoffzellen mittels eines Gaskreislaufs mit nachgeschalteter Gas-/Dampfturbine möglich, oder die Verwendung in Kreisprozessen möglich.

Bei den Brennstoffzellen kann es sich sowohl um herkömmliche, sogenannte Stacks, als auch um Brennstoffzellen mit Hohlfasern, insbesondere mit Mikrohohlfasern, handeln. Entsprechendes gilt auch für die Elektrolyseure, bei denen im Wesentlichen lediglich eine Richtungsumkehr des Funktionsablaufs erfolgt.

In Folge der Verwendung von Brennstoffzellen an Stelle von sich drehenden Dampfturbinen ist eine Stromerzeugung ohne bewegte Maschinenteile möglich, so dass störende Geräusche vermieden werden können und eine Stromerzeugung auch innerhalb eines Kur-, Klinikgeländes oder ähnlichem möglich ist.

Im Folgenden ist die Erfindung anhand von Ausführungsbeispielen, teilweise unter Bezugnahme auf die beiliegende Zeichnung, im Einzelnen näher erläutert. In der Zeichnung zeigen:

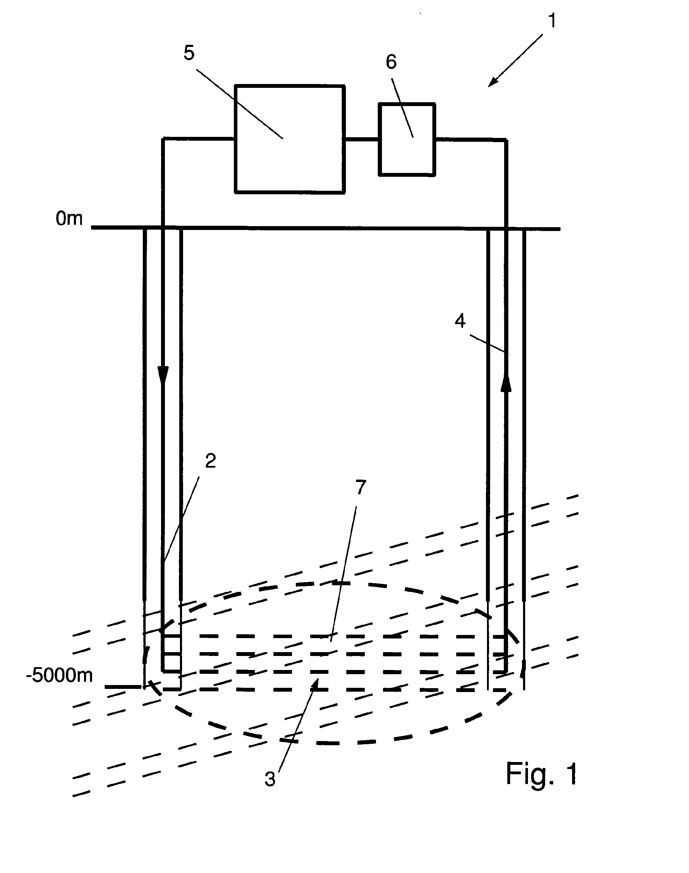

Fig. 1 ein stark vereinfachtes Schema einer Anlage zur Energieerzeugung,

Fig. 2 eine schematische Darstellung der Funktionsweise einer Karbonat-Schmelze-Brennstoffzelle (MCFC),

Fig. 3 einen schematisch dargestellten Schnitt durch eine Hohlfaser, welche eine Matrix mit einem Elektrolyt aus geschmolzenem Lithium- und Kaliumkarbonat bildet,

Fig. 4 ein Diagramm zur Verdeutlichung des Energiebedarfs für die Elektrolyse von $H_2O$, wobei der Energiebedarf über der Temperatur dargestellt ist,

Fig. 5 Prinzipdarstellung des HDR-Verfahrens gemäß dem Stand der Technik (© Helmut Tenzer), und

Fig. 6 Schema der geothermischen Stromerzeugung anhand der HDR-Demonstrationsanlage Bad Urach, Stand der Technik.

Eine Anlage zur Nutzung von Geothermie 1 gemäß dem ersten Ausführungsbeispiel weist eine Injektionsbohrung 2 zum Einleiten eines Wärmetransportfluids in das Erdinnere auf, wobei eine Injektionspumpe (nicht dargestellt) vorgesehen ist, die das Wärmetransportfluid unter Druck in die Tiefe bis zum Ende der Injektionsbohrung 2 fördert. Die Strömungsrichtung des Wärmetransportfluids ist durch Pfeile verdeutlicht. Anschließend an die Injektionsbohrung 2 ist ein erster Wärmetauschbereich 3 im Erdinneren in einer Tiefe von ca. 5000 m vorgesehen, in welchem das Wärmetransportfluid, das durch ein in diesem Bereich vorhandenes Kluftsystem strömt, die Gesteinswärme aufnimmt. Hierbei herrschen in der vorliegenden Tiefe Temperaturen von ca. 200°C. Es ist jedoch durchaus möglich viel tiefere Bohrungen zu verwenden, insbesondere von mindestens 15 km, so dass die erzielbaren Wärmetransportfluid-Temperaturen und somit auch die Temperaturen im Produktionsbereich deutlich höher liegen. Das erhitzte Wärmetransportfluid, vorliegend Wasser, wird über eine Produktionsbohrung 4, gegebenenfalls mit Hilfe einer Produktionspumpe (nicht dargestellt), entnommen und für die Wasserstofferzeugung einem Elektrolyseur 5 zugeführt, wobei es vom im Untergrund auf Grund des hohen Druckes flüssigen Zustand in einen gasförmigen Zustand, also Wasserdampf, übergeht. Um das Wärmetransportfluid auf eine entsprechend hohe Betriebstemperatur zu bringen, ist direkt vor dem Elektrolyseur 5 eine mit Mikrowellen arbeitende Heizvorrichtung 6 vorgesehen, so dass das Wärmetransportfluid, das etwa eine Temperatur von 150°C hat, auf deutlich höhere Temperaturen erhitzt werden kann.

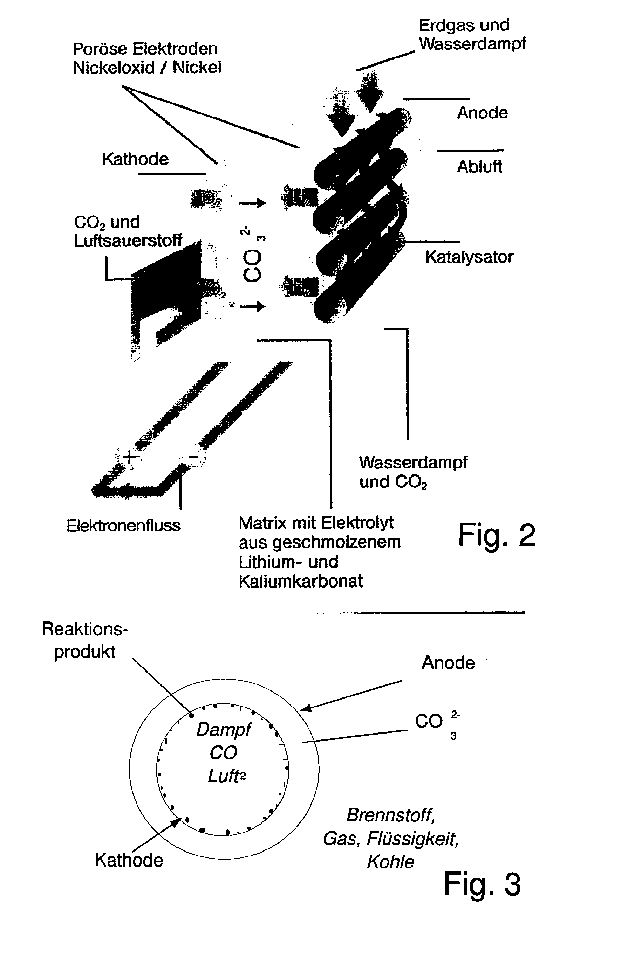

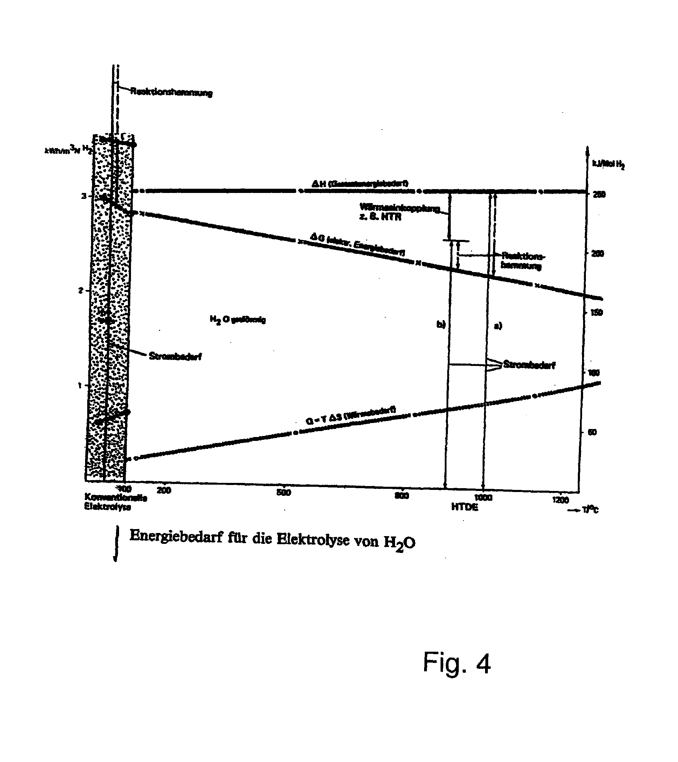

Zur Verdeutlichung des Energiebedarfs bei einer Elektrolyse von Wasser wird auf Fig. 4 verwiesen. Wie aus dem Diagramm von Fig. 4 ersichtlich ist, sinkt der Strombedarf für die Elektrolyse bei steigender Temperatur, so dass für einen möglichst geringen Energiebedarf Wasserdampf mit möglichst hoher Temperatur dem Elektrolyseur 5 zuzuführen ist, wofür die Produktionsbohrung 4 eine entsprechende Tiefe benötigt und zur Vermeidung von Wärmeverlusten der Elektrolyseur 5 möglichst nahe an der Entnahmestelle, angeordnet ist, aus wartungstechnischen Gründen möglichst leicht zugänglich an der Erdoberfläche. In Abhängigkeit von der Temperatur des Wasserdampfes (Abszisse in Fig. 4) kann das Elektrolyse-Verfahren gewählt werden. Dabei ist im Bereich bis ca. 300°C eine PEM-Elektrolyse, im Bereich von ca. 300°C bis 750°C eine MCFC-Elektrolyse (Karbonatschmelze - die Umkehrreaktion, das heißt die Verwendung als Brennstoffzelle ist in Fig. 2 dargestellt), im Bereich von ca. 750°C bis 1000°C eine SOFC-Elektrolyse möglich. Im Diagramm von Fig. 4 mit a) bezeichnet ist eine Verdeutlichung einer adiabaten Elektrolyse mit hoher Stromdichte und direkter Einkopplung von Hochtemperaturwärme, und mit b) bezeichnet ist endothermen Elektrolyse, die eine geringere Stromdichte hat.

Gemäß dem ersten Ausführungsbeispiel befinden sind im Wärmetauschbereich 3 Kohleschichten oder kohlenstoffhaltige Schichten 7, so dass das geförderte Wärmetransportfluid Kohlenstoff enthält. Ferner wird dem rückgeführten Wärmetransportfluid Kohlenstoff zugesetzt, so dass sich der Kohlenstoffgehalt erhöht. Durch die Kombination von Kohle, Wasser (Transportfluid) und Energie ergibt sich bei der Elektrolyse Sauerstoff, Kohlenmonoxid und Wasserstoff. Der Kohlenstoff dient hierbei unter anderem als Katalysator für die Elektrolyse.

Entsprechend einer ersten Variante wird der Wasserdampf unter Umgehung der Heizvorrichtung 6 direkt einem Elektrolyseur 5 zugeführt, wobei es sich auf Grund der Temperatur von ca. 150°C und der dem Wasserdampf beigefügten Verunreinigungen um einen PEM-Elektrolyseur 5 handelt.

Hierbei weist der Elektrolyseur 5 Kohlenstoff-Elektroden auf, welche vorliegend zumindest teilweise durch mobilen, pulverförmig vorliegenden Kohlenstoff gebildet sind. Dadurch, dass der Wasserdampf auch Kohlenstoff enthält, werden die Kohlenstoff-Elektroden während des Betriebs regeneriert, so dass der Elektrolyseur 5 lange ohne Wartungsarbeiten zum Austausch der Elektroden betrieben werden kann.

Gemäß einer zweiten Variante wird der Wasserdampf, der wiederum Kohlenstoff enthält, bevor er zum Elektrolyseur 5 gelangt durch die Heizvorrichtung 6 geleitet und auf ca. 650°C erhitzt. Anschließend erfolgt die Elektrolyse des Wasserdampfs im MCFC-Elektrolyseur.

Dem Elektrolyseur 5 nachgeordnet ist in beiden Varianten eine Brennstoffzelle 5', vorliegend eine MCFC-Brennstoffzelle, wie sie in Fig.2 oder Fig. 3 dargestellt ist. Hierbei ist in Fig. 2 ein vergrößerter schematisch dargestellter Schnitt durch eine als Stapel aufgebaute Brennstoffzelle dargestellt. In Fig. 3 ist eine Hohlfaser einer aus einer Vielzahl von derartigen Hohlfasern gebildeten Brennstoffzelle dargestellt, die alternativ verwendet werden kann. Bei der dem Elektrolyseur 5 nachgeordneten Brennstoffzelle 5' kann es sich um eine im Prinzip bekannte Brennstoffzelle handeln, wobei der Typ der Brennstoffzelle 5' in Abhängigkeit der bei der Elektrolyse gewonnenen Stoffe und des Verunreinigungsgrades derselben zu wählen ist.

Gemäß dem zweiten Ausführungsbeispiel, welches in seinem Aufbau bis zum Elektrolyseur 5 mit dem ersten Ausführungsbeispiel übereinstimmt, erfolgt eine getrennte Speicherung der Edukte der Elektrolyse. Wasserstoff und Sauerstoff können auf diese Weise in größerem Maßstab gewonnenen werden und die Verstromung mittels einer Brennstoffzelle kann anderenorts, beispielsweise in einer ein Kraftfahrzeug antreibenden Brennstoffzelle, erfolgen.

Die Restwärme der Brennstoffzelle 5' kann zur Optimierung der Energieausnutzung beipielsweise für einen Thermogenerator, als Fernwärme oder auf sonstige bekannte Weise, insbesondere in thermodynamischen Kreisprozessen, verwendet werden.

Ferner kann die Restwärme für eine Molekularsieb- oder Zeolith-Dehydrierung für eine nachfolgende exotherme Hydrierung verwendet werden. Hierbei ergibt sich ein Reaktionswärmegewinn bei der Hydrierung der Zeolithe, die sich in Folge der exothermen Reaktion auf Temperaturen bis zu 370°C erwärmen, oder der Metall-Hydride, die sich in Folge der exothermen Reaktion auf Temperaturen bis zu 550°C erwärmen. Die Regeneration und Dehydrierung erfolgt mit Erdwärme von über 100°C.

Ist in einem geothermisch aktiven Gebiet keine Kohleschicht oder kohlenstoffhaltige Schicht in erreichbarer Tiefe, so kann dem Wärmetransportfluid mit Hilfe einer entsprechenden Vorrichtung auch vor dem Elektrolyseur auch Kohlenstoff zugesetzt werden.

**Bezugszeichenliste zu Fig. 5**

1 Injektionsbohrung
2 Stimmuliertes Kluftsystem (Tiefe: ca. 4000 - 5000 m, Temperatur T: ca. 200°C)
3 Produktionsbohrungen
4 Wärmetauscher
5 Turbinenhaus
6 Kühlung
7 Hochtemperatur-Untergrundspeicher für Überschußwärme
8 Beobachtungsbohrungen
9 Verbraucher Strom und Wärme

**Patentansprüche**

1. Verfahren zur Nutzung von Geothermie, gemäß dem ein Wärmetransportfluid über mindestens eine Produktionsbohrung dem Erdreich entnommen wird, wobei es eine gegenüber der Umgebungstemperatur erhöhte Temperatur aufweist, und das Wärmetransportfluid nach der Entnahme einem Elektrolyseur (5) zugeführt wird, **dadurch gekennzeichnet, dass** dem Wärmetransportfluid Kohlenstoff, insbesondere eine mit Bor dotiertem Diamant und/oder einem Nebengruppenelement der achten Nebengruppe beschichtete Aktivkohle, und/oder eine Kohlenstoff-Verbindung und/oder eine mit Bor dotiertem Diamant und/oder einem Nebengruppenelement der achten Nebengruppe beschichteter Zeolith und/oder ein Nebengruppenelement der achten Nebengruppe und/oder eine Verbindung eines Nebengruppenelements der achten Nebengruppe zugesetzt wird.

2. Verfahren nach Anspruch 1, **dadurch gekennzeichnet, dass** und/oder Silizium und/oder oder eine Silizium-Verbindung und/oder Schwefel und/oder eine Schwefel-Verbindung und/oder Phosphor und/oder eine Phosphor-Verbindung und/oder Stickstoff und/oder eine Stickstoff-Verbindung und/oder $TiO_2$ und/oder $CuO_x$ und/oder $ZnO_x$ und/oder $Fe_2O_3$ und/oder $Fe_3O_4$ und/oder $WO_3$ und/oder $V_2O_5$ und/oder $LiCO_3$ und/oder $KCO_3$ und/oder $NiO_x$ und/oder Kupfer und/oder Zink und/oder Gold zugesetzt wird.

3. Verfahren nach Anspruch 1 oder 2, **dadurch gekennzeichnet, dass** mindestens eine Injektionsbohrung vorgesehen ist, über die Wasser und/oder ein Reaktionsprodukt einer dem Elektrolyseur nachgeordneten Brennstoffzelle wieder dem Erdreich zugeführt wird.

4. Verfahren nach einem der vorhergehenden Ansprüche, **dadurch gekennzeichnet, dass** die Wärmetransportfluid-Temperatur kurz vor dem Elektrolyseur (5) erhöht wird.

5. Verfahren nach Anspruch 4, **dadurch gekennzeichnet, dass** die Wärmetransportfluid-Temperatur mittels Mikrowellen, eines Lasers, elektrisch und/oder induktiv erhöht wird.

**6.** Verfahren nach Anspruch 4 oder 5, **dadurch gekennzeichnet, dass** die Wärmetransportfluid-Temperatur auf 500°C bis über 1000°C erhöht wird.

**7.** Verfahren nach einem der vorhergehenden Ansprüchen, **dadurch gekennzeichnet, dass** der mittels Elektrolyse im Elektrolyseur (5) erzeugte Wasserstoff und/oder Sauerstoff in einer Brennstoffzelle (5') verstromt wird.

**8.** Verfahren nach einem der vorhergehenden Ansprüchen, **dadurch gekennzeichnet, dass** der mittels Elektrolyse im Elektrolyseur (5) erzeugte Wasserstoff und Sauerstoff in einer PEM-Brennstoffzelle verstromt wird.

**9.** Verfahren nach einem der vorhergehenden Ansprüchen, **dadurch gekennzeichnet, dass** die dem Wärmetransportfluid zuzuführenden Stoffe über eine Injektionsbohrung dem Erdreich zugeführt werden, aus dem Erdreich ausgeschwemmt werden und/oder dem Wärmetransportfluid nach der Produktionsbohrung zugeführt werden.

**10.** Anlage zur Energiegewinnung und/oder Wasserstoffgewinnung unter Nutzung von Geothermie, wobei mindestens eine Produktionsbohrung zur Entnahme eines Wärmetransportfluids aus dem Erdreich vorgesehen ist, wobei in oder der Produktionsbohrung nachgeordnet ein Elektrolyseur (5) angeordnet ist, **dadurch gekennzeichnet, dass** die Produktionsbohrung durch eine Kohlenstoff oder eine Kohlenstoff-Verbindung enthaltende Schicht dringt und/oder die Entnahmestelle im Bereich einer Kohlenstoff oder eine Kohlenstoff-Verbindung enthaltenden Schicht liegt und/oder dass die Anlage eine Vorrichtung zur Zugabe von Kohlenstoff, insbesondere in Form von mit Bor dotiertem Diamant und/oder einem Nebengruppenelement der achten Nebengruppe beschichteter Aktivkohle, und/oder einer Kohlenstoff-Verbindung und/oder einem mit Bor dotiertem Diamant und/oder einem Nebengruppenelement der achten Nebengruppe beschichteten Zeolith und/oder einem Nebengruppenelement der achten Nebengruppe und/oder einer Verbindung eines Nebengruppenelements der achten Nebengruppe zum Wärmetransportfluid vor dem Elektrolyseur (5) aufweist.

Fig. 1

Poröse Elektroden
Nickeloxid / Nickel

Erdgas und
Wasserdampf

Anode

Abluft

Kathode

$CO_2$ und
Luftsauerstoff

$CO_3^{2-}$

Katalysator

Wasserdampf
und $CO_2$

Elektronenfluss

Matrix mit Elektrolyt
aus geschmolzenem
Lithium- und
Kaliumkarbonat

Fig. 2

Reaktionsprodukt

Anode

$CO_3^{2-}$

Dampf
CO
Luft$_2$

Kathode

Brennstoff,
Gas, Flüssigkeit,
Kohle

Fig. 3

Energiebedarf für die Elektrolyse von $H_2O$

Fig. 4

Fig.5

# Geothermische Stromerzeugung

## HOT DRY ROCK - DEMONSTRATIONSANLAGE
## BAD URACH

**Dampf**
**Industrie**
**Prozesswärme**
**Fernwärmenetz**
**Hochtemperatur-**
**Untergrundspeicher**

**ORC - ANLAGE**
**(Organic Rankine Cycle)**
geschlossener Binärkreislauf

**13 - 30 MW**$_{th}$

**Stromproduktion**

**Projekt Phase I: ca. 1-3 MW**$_{el}$
**Projekt Phase II: 5-6 MW**$_{el}$

**Wärme-**
**tauscher**

**Steuerventil**

**Turbine**

**Generator**

**Kühlung**
**Auslauf**

**Verdampfer**

**Kondensator**

**Pumpe für Arbeitsmittel**

**140 - 175 °C**
**40 - 150 kg/s**

**70 °C**

**Gewächshäuser**
**Fischzucht**
**Niedertemperatur-**
**Untergrundspeicher**

**Nahwärmeversorgung**

**Thermische**
**Untergrundspeicherung**

**Kühlung**
**Zulauf**

**Produktion**

**Tauchpumpen**

**Reinjektion**
**ca. 40-50 °C**

Stadtwerke Bad Urach
Geothermische Energie 1999

## Fig. 6

**EP 1 609 988 A1**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | US 5 661 977 A (SHNELL ET AL) 2. September 1997 (1997-09-02) * Spalte 13, Zeile 46 - Spalte 14, Zeile 67 * * Abbildung 8 * ----- | 1,10 | F03G7/04 |
| A | US 4 927 856 A (ELION ET AL) 22. Mai 1990 (1990-05-22) * das ganze Dokument * ----- | 1,10 | |
| A | US 2003/010652 A1 (HUNT ROBERT DANIEL) 16. Januar 2003 (2003-01-16) * das ganze Dokument * ----- | 1,10 | |
| A | US 4 002 729 A (ABRAHAM ET AL) 11. Januar 1977 (1977-01-11) * das ganze Dokument * ----- | 1,10 | |

**RECHERCHIERTE SACHGEBIETE (Int.Cl.7)**

F03G
E21B
F24J

Der vorliegende Recherchenbericht wurde für alle Patentansprüche erstellt

| Recherchenort | Abschlußdatum der Recherche | Prüfer |
|---|---|---|
| München | 21. Juni 2005 | Giorgini, G |

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**                    EP 05 01 1822

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

21-06-2005

| Im Recherchenbericht angeführtes Patentdokument | Datum der Veröffentlichung | Mitglied(er) der Patentfamilie | Datum der Veröffentlichung |
|---|---|---|---|
| US 5661977 A | 02-09-1997 | US 5697218 A | 16-12-1997 |
| | | AT 224521 T | 15-10-2002 |
| | | AU 700526 B2 | 07-01-1999 |
| | | AU 6102696 A | 30-12-1996 |
| | | BR 9609023 A | 14-12-1999 |
| | | CA 2221376 A1 | 19-12-1996 |
| | | CN 1186543 A ,C | 01-07-1998 |
| | | DE 69623773 D1 | 24-10-2002 |
| | | DE 69623773 T2 | 30-01-2003 |
| | | EP 0830550 A1 | 25-03-1998 |
| | | RU 2162991 C2 | 10-02-2001 |
| | | WO 9641104 A2 | 19-12-1996 |
| | | US 5911684 A | 15-06-1999 |
| | | JP 11508342 T | 21-07-1999 |
| US 4927856 A | 22-05-1990 | KEINE | |
| US 2003010652 A1 | 16-01-2003 | KEINE | |
| US 4002729 A | 11-01-1977 | KEINE | |

EPO FORM P0461

Für nähere Einzelheiten zu diesem Anhang : siehe Amtsblatt des Europäischen Patentamts, Nr.12/82